# EUROPEAN PATENT APPLICATION

(11) **EP 1 783 177 A1**
(43) Date of publication of application: **09.05.2007**
(21) Application number: 05746010.7
(22) Date of filing: 02.06.2005
(51) Int. Cl.: C09B 69/00, G01N 21/64

(54) **NOVEL ISONITRILE COMPOUND, PROCESS FOR PRODUCING THE SAME, FLUORESCENCE LABELING AGENT FOR MARINE ATTACHED ORGANISM LARVA CONTAINING THE COMPOUND, AND METHOD OF DETECTING MARINE ATTACHED ORGANISM LARVA THEREWITH**

(30) Priority: 14.07.2004 JP 2004206783
(71) Applicant: National University Corporation Tokyo University of Agriculture and Technology, Fuchu-shi, Tokyo 183-8538 (JP); Central Research Institute of Electric Power Industry, Tokyo 100-8126 (JP)
(72) Inventor: KITANO, Yoshikazu; c/o National University, Fuchu-Shi Tokyo 183-8538 (JP); SAKAGUCHI, Isamu;, Abiko-shi Chiba 270-1194 (JP); NOGATA, Yasuyuki;, Abiko-shi Chiba, 270-1194 (JP); MATSUMURA, Kiyotaka;, Abiko-shi Chiba, 270-1194 (JP)
(74) Representative: Cresswell, Thomas Anthony
(86) International application number: PCT/JP2005/010130
(87) International publication number: WO 2006/006319

(57) **Abstract**

Novel isonitrile compounds represented by the general formula F-A-NC, their method of manufacture, a marine fouling organism larva fluorescent marker having at least one of these compounds as an active ingredient, and a method of detecting this marine fouling organism larva using this marker.
F in the aforesaid general formula represents a fluorescent functional group, and A represents a linking chain.

## Description

### Field of the Invention

The present invention relates to a novel isonitrile compound, and in particular to a method of manufacturing this compound, to a fluorescent marker for marine fouling organism larvae which can easily count the concentration (number) of marine fouling organism larvae such as barnacles, and to a method of detecting the marine fouling organism larvae in seawater using this fluorescent marker.

### Background of the Invention

Marine organisms such as barnacles settle to generator cooling systems, fishnets and ship hulls, and cause a large amount of damage in terms of increased water suction pump load, decreased cooling efficiency, blocking of thin pipes, torn fishnets, reduced ship speed and increased fuel consumption. To prevent this damage, in the prior art, a large amount of a chemical such as an antifouling agent was introduced into seawater, but this incurred a large cost. In addition, there were some periods when the marine organism larvae were not present, so part or most of the chemical used was wasted, and this was one factor contributing to marine pollution.
This disadvantage can be resolved by knowing when each harmful marine organism is likely to appear.

From this viewpoint, a method has recently been proposed where barnacle cypris larvae are irradiated with an excitation light of specific wavelength so that their fluorescence can be detected, the fluorescence distribution pattern is analyzed by a computer as digital image information, and this information is then compared with fluorescence distribution pattern recognition information unique to fouling larvae which is prestored in the computer so as to determine the type of barnacle (Patent document 1). However, in this method, since observation is made of the autofluorescence of barnacle cypris larvae which do not have a strong fluorescence intensity, it is occasionally difficult to count the number of individuals involved.

On the other hand, in order to easily detect a natural or synthetic chemical substance, it is a common practice to label the substance by bonding to a compound which emits fluorescence, so that the presence of the substance is detected. Examples of this fluorescent marker are cyanine dyes having a specific structure in DNA hybridization (Patent document 2), and fluorescent-labeled polycarboxylic acids which are used to prevent trouble such as scale in water treatment systems (Patent document 3).

Patent document 1 JP 2004-012467 A
Patent document 2 JP 2001-272350 A
Patent document 3 JP 2001-278914 A

### Summary of the Invention

### Problems which the Invention aims to Resolve

As a result of intensive research carried out in order to resolve the above disadvantages, the Inventors discovered that if an isonitrile compound having a unique action on marine fouling organism larvae were combined with a fluorescent functional group having a high fluorescence efficiency, it was suitable for use as a fluorescent marker for easy measurement of the marine fouling organism larvae concentration (number of individuals) in seawater, and thereby arrived at the present invention.
It is a first object of the invention to provide a novel isonitrile compound suitable for use as a fluorescent marker.
It is a second object of the invention to provide a method of manufacturing an isonitrile compound suitable for use as a fluorescent marker.
It is a third object of the invention to provide a fluorescent marker suitable for easily detecting the presence of marine fouling organism larvae even when their concentration is low.
It is a fourth object of the invention to provide a method which can specify the concentration of marine fouling organism larvae with a high sensitivity and good efficiency.

### Means to Resolve the Above Problems

The aforesaid objects of the invention were achieved by an isonitrile compound represented by the general formula F-A-NC, its method of manufacture, a marine fouling organism larva fluorescent marker having at least one of these compounds as an active ingredient, and a method of detecting this marine fouling organism larva using said marker.
Here, F in the aforesaid formula represents a fluorescent functional group, and A represents a linking chain.

### Effect of the Invention

According to the invention, not only can the presence or absence of marine fouling organisms present in seawater be detected, but the concentration of larvae can easily be found, so the appearance of fouling organisms can be predicted, an amount of antifouling agent can be determined at suitable timing of each fouling organisms bloom, and consequently damage due to marine fouling organisms can be effectively prevented. Also, the cost of chemicals used for prevention can be largely reduced, and the marine pollution due to introduction of antifouling agent can be kept to a minimum.

### Brief Description of the Drawings

FIG. 1 is a drawing corresponding to a fluorescence microscopic picture showing an image obtained in Example 2,

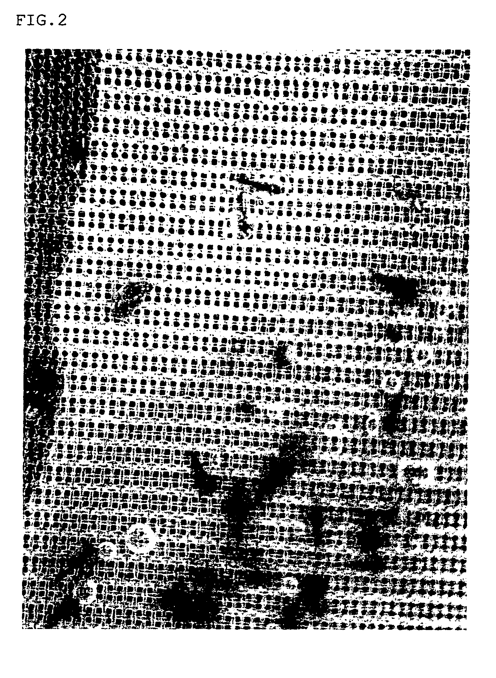

FIG. 2 is a drawing corresponding to a microscopic picture showing the same image obtained with ordinary light.
FIG. 3 is a drawing corresponding to a fluorescence microscopic picture showing an image obtained in Example 3.

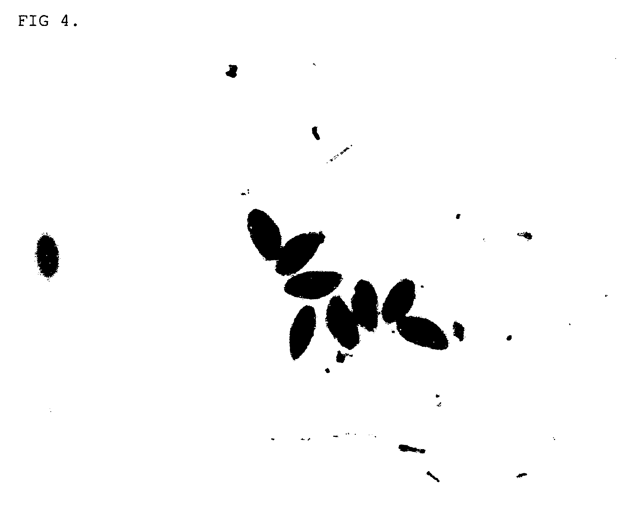

FIG. 4 is a drawing corresponding to a microscopic picture showing the same image obtained with ordinary light.

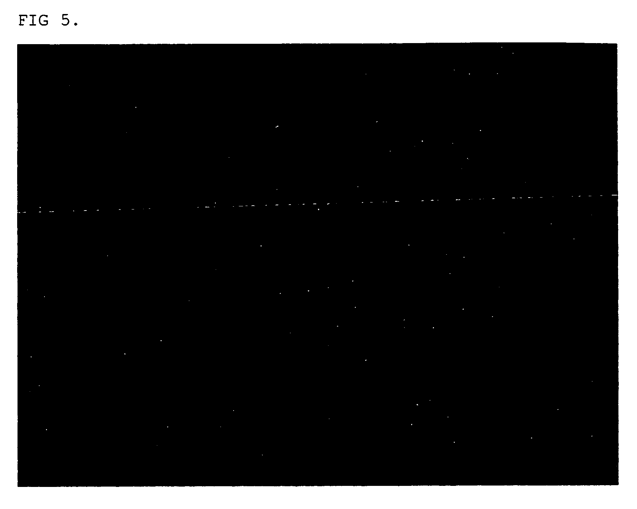

FIG. 5 is a drawing corresponding to a fluorescence microscopic picture showing an image obtained in Example 4.

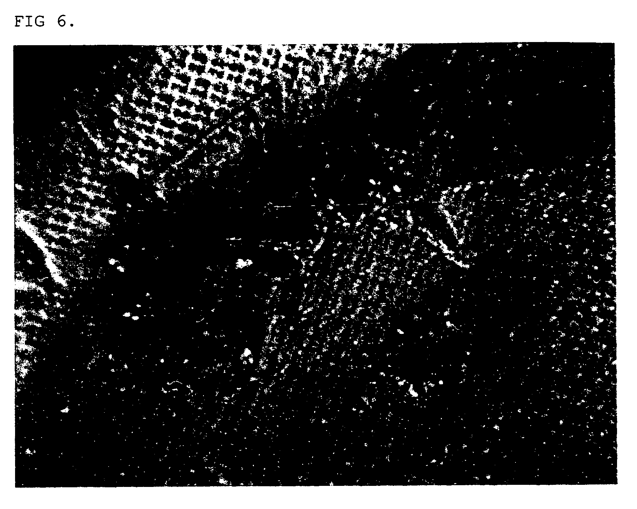

FIG. 6 is a drawing corresponding to a microscopic picture showing the same image obtained with ordinary light.

The novel isonitrile compound represented by the general formula F-A-NC of the present invention is a compound wherein the fluorescent functional group F is bonded to an isonitrile group (NC) via a linking chain A.
Examples of the fluorescent functional group F are mononuclear aromatic rings, polynuclear aromatic rings and heterocyclic aromatic rings containing a heteroatom. Specific examples are phenyl, benzyl, phenethyl, trityl, naphthyl, anthranyl, pyrenyl, 1-(dimethylamino)-5-napthalenesulfonyl (dansyl), dansylaziridyl, 4-dimethylaminoazobenzene-4-sulfonyl (dabsyl), isoindolyl, bimanyl, aminonaphthalenesulfonic acid, fluorescein or eosin and residues of derivatives thereof, and in particular, residues of iodoacetoamide derivatives, anilinonaphthalene or residues of derivatives thereof, coumarin or residues of derivatives thereof, and pyrene maleimide or residues of derivatives thereof. Examples of preferred fluorescent functional groups are fluorescein or residues of derivatives thereof, dansyl, pyrene residues, and anthracene residues. Not only do these have a high fluorescence intensity, but they also have excellent stability in water which is preferred. In the present invention, the term "fluorescence" is used in the sense of fluorescent light based on absorption of an excitation light including phosphorescence.

Examples of the linking chain A are alkyl, ether, ester, amide, sulfide, disulfide and amino. Specific examples are alkyl chains having 2-15 carbon atoms including carbon chains such as ethane, propane, butane, heptane, decane and dodecane, ether chain, ester chain, amide chain, sulfide chain, disulfide chain, amino chain, carbamide chain and thiocarbamide chain. Among these, alkyl chains are easy to procure, preparation is easy and stability is high, therefore they are preferred.

The method of manufacturing the compound represented by the general formula F-A-NC is not particularly limited, but for example, in the case when the compound X-A-Y (X is an amino, hydroxyl, a halogen atom, carboxyl or mercaptyl, and Y is hydroxyl, amino or a halogen atom) is used as starting material, when Y is hydroxyl or a halogen atom, the Y part is converted to a NC group using trimethylsilyl cyanide and a zinc reagent or silver reagent, when Y is amino, the Y part is converted to formamide using a formate ester, converted to a NC group by a dehydration reaction using toluene sulfonic acid chloride, pyridine or the like, and a nucleophilic substitution reaction is then performed with the obtained X-A-NC and the fluorescent functional group F to obtain the compound represented by the general formula F-A-NC.

Specific examples of the compound represented by the general formula
F-A-NC are as follows:
(1) 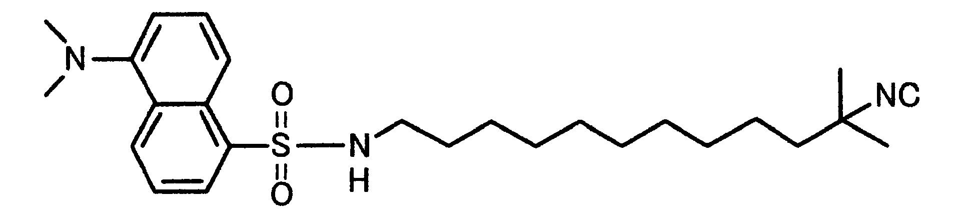 5-dimethylamino-naphthalene-1-sulfonic acid (11-isocyano-11-methyl-dodecyl)-amide
(2) 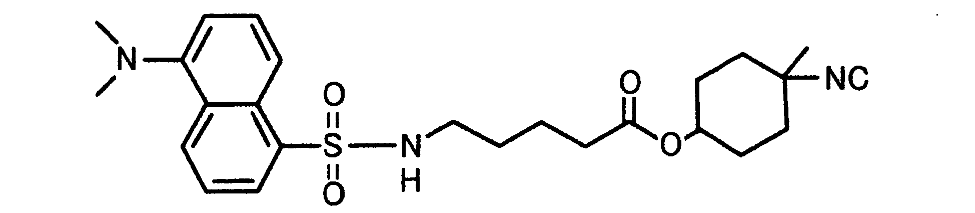 6-(5-dimethylamino-naphthalene-1-sulfonylamino)-hexanoic acid 4-isocyano-4-methyl-cyclohexyl ester
(3) 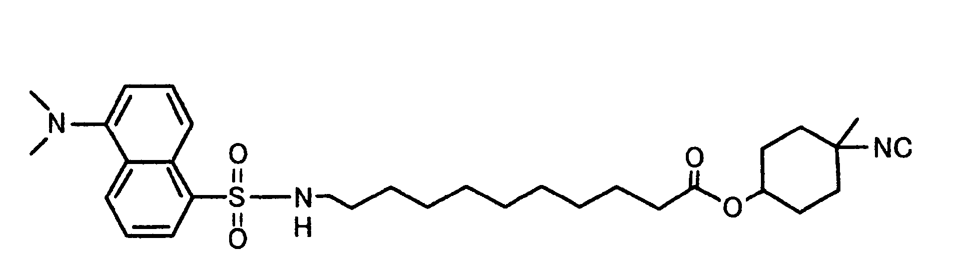 11-(5-dimethylamino-naphthalene-1-sulfonylamino)-undecanoic acid 4-isocyano-4-methyl-cyclohexyl ester
(4) 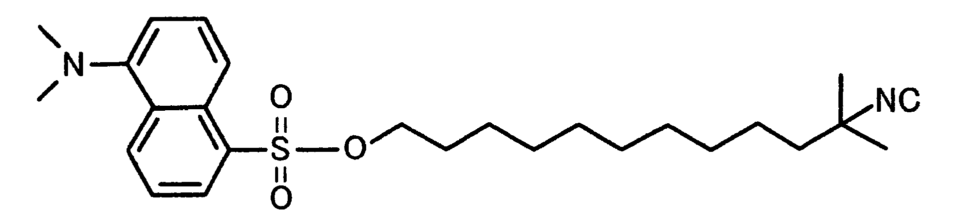 5-dimethylamino-naphthalene-1-sulfonic acid (11-isocyano-11-methyl-dodecyl) ester
(5) 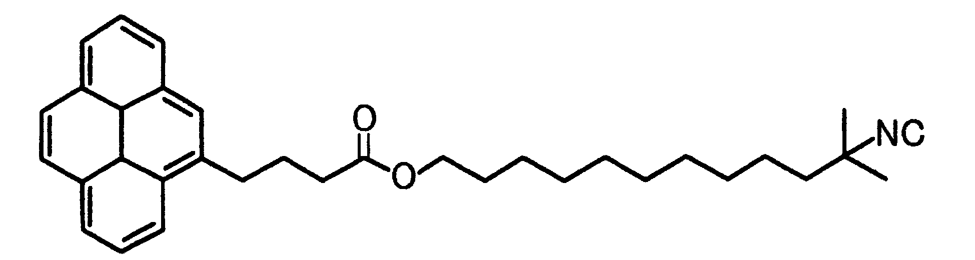 4-(10b, 10c-dihydro-pyrene-4-il)-butyric acid (11-isocyano-11-methyl-dodecyl) ester
(6) 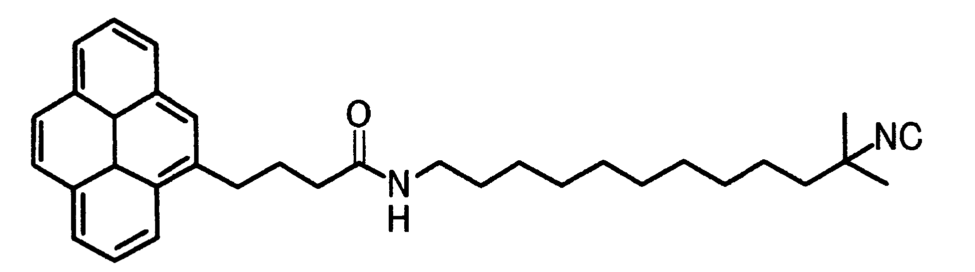 4-(10b, 10c-dihydro-pyrene-4-il)-N-(11-isocyano-11-methyldodecyl) butylamide
(7) 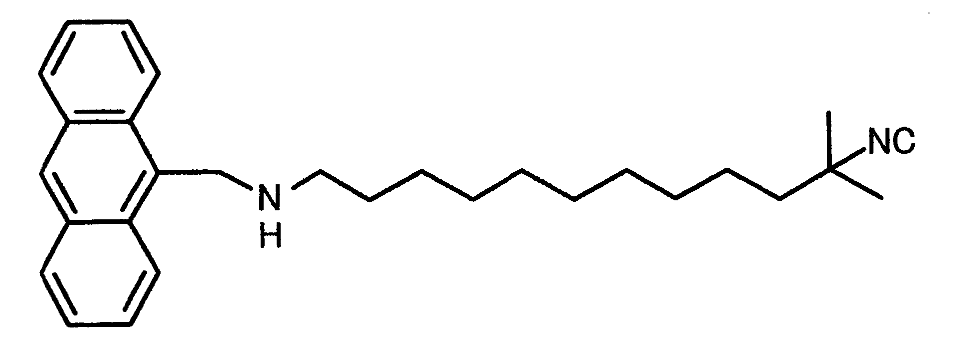 anthracene-9-ilmethyl-(11-isocyano-11-methyl-dodecyl) amine
(8) 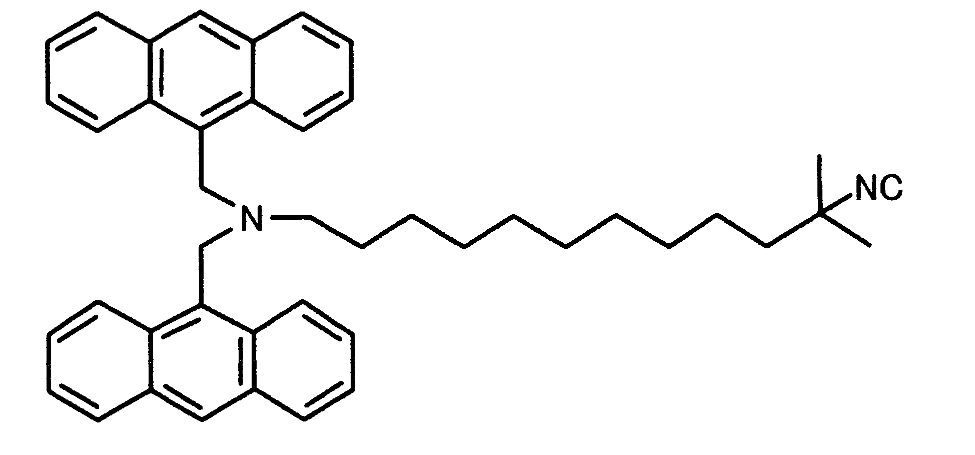 bis-anthracene-9-ilmethyl-(11-isocyano-11-methyl-dodecyl) amine
(9) 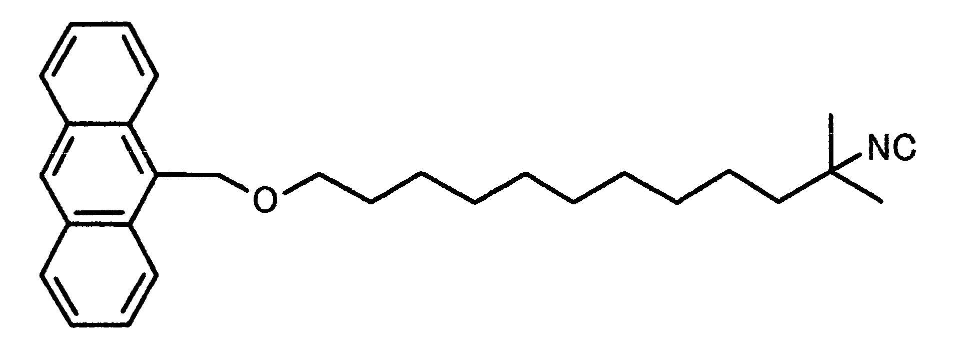 9-(11-isocyano-11-methyl-dodecyloxymethyl) anthracene
(10) 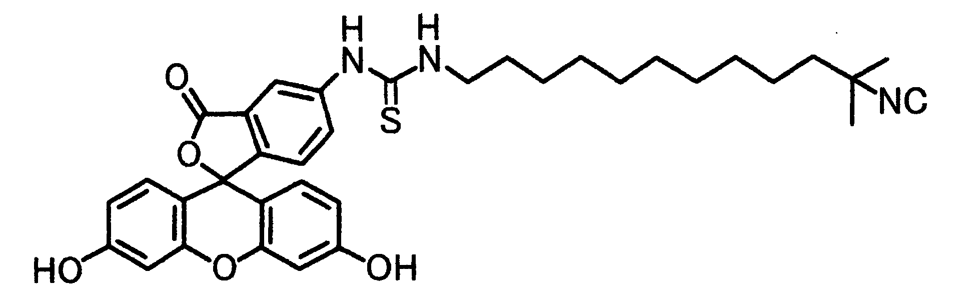 1-fluorescein-3-(11-isocyano-11-methyl-dodecyl) thiourea
(11) 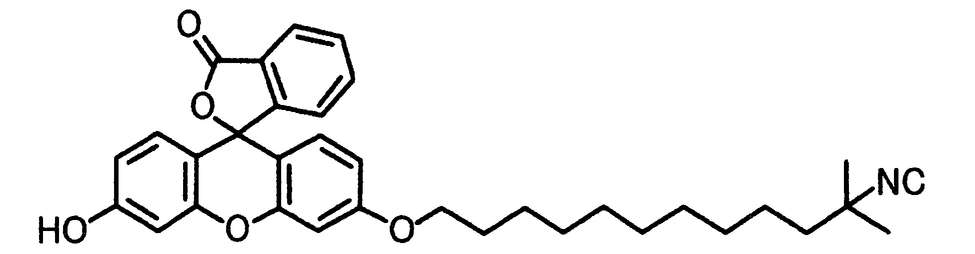 fluorescein o-(11-isocyano-11-methyl-dodecyl) ether
(12) 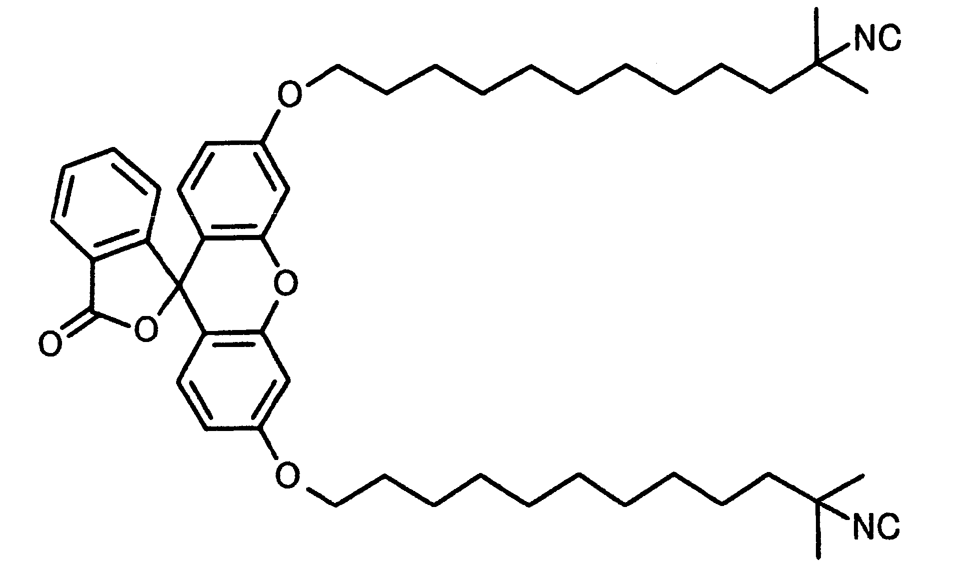 fluorescein o,o'-di-(11-isocyano-11-methyl-dodecyl) ether
(13) 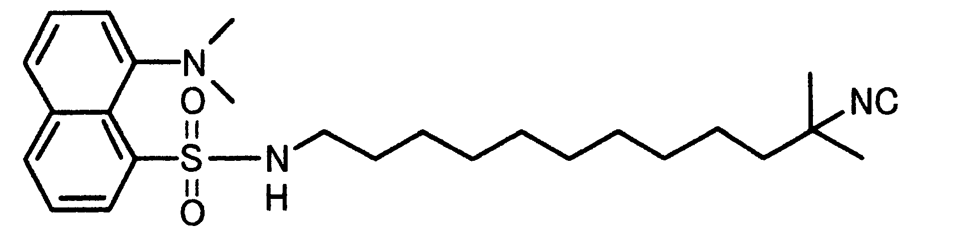 8-dimethylamino-naphthalene-1-sulfonic acid (11-isocyano-11-methyl-dodecyl) amide
(14) 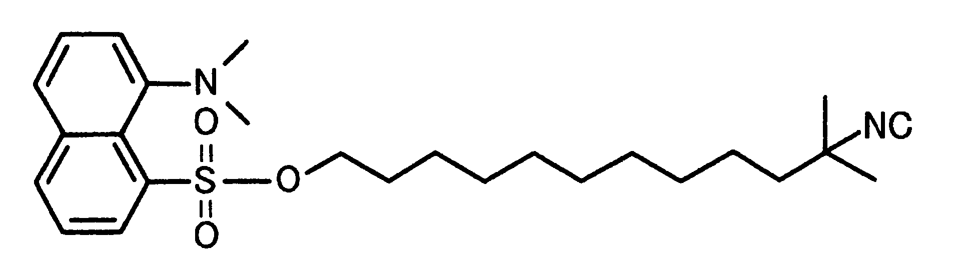 8-dimethylamino-naphthalene-1-sulfonic acid (11-isocyano-11-methyl-dodecyl) ester
In the present invention, from the viewpoint of manufacturing ease, among the above, the compounds (1)-(12) are particularly advantageous.

The fluorescent marker for marine fouling organism larvae of the present invention contains at least one of the aforesaid isonitrile compounds of the invention represented by the general formula F-A-NC as active ingredient. The isonitrile compound of the present invention is the active ingredient of the fluorescent marker which permits the detection of marine fouling organism larvae by acting upon them when added to seawater in which these larvae are present. The fluorescent marker normally comprises a molding agent and/or solvent together with the active ingredient, but it will be of course understood that it may comprise only the active ingredient.
Examples of the aforesaid marine fouling organism larvae are those barnacles such as *Balanus Amphitrite, B. eburneus, Megabalanus rosa, M. volcano, B. albicostatus, Chthamalus challengeri, B. rostratus,* and *B. improvisus.*

The labeling of the marine fouling organism larvae using the fluorescent marker of the present invention may be performed, for example, by dissolving the isonitrile compound represented by the general formula F-A-NC of the present invention in a solvent such as dimethyl sulfoxide, methanol, ethanol or 2-propanol, adding seawater thereto, allowing the isonitrile compound to fully act on the marine fouling organism larvae, and leaving the mixture to stand until the active ingredient functions as a marker. The treatment time is not particularly limited, but is normally within the range of 1-2 hours. The concentration of the isonitrile compound when used in solution may be any desired concentration, but is normally within the range of 0.001-1 weight %. Further, the amount of fluorescent marker per 100 ml of seawater is not particularly limited, but is normally within the range of 0.01-1 mg in terms of the amount of isonitrile compound per 100 ml of seawater.
The aforesaid labeling may be performed at ordinary temperature, but is preferably performed at about 25°C.

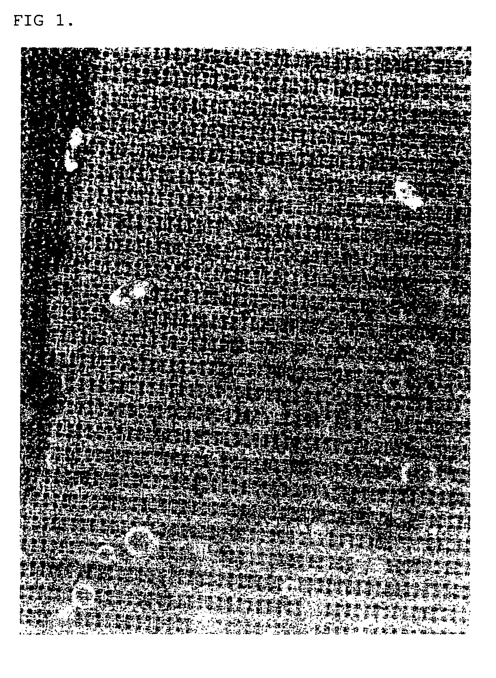

The concentration (number of individuals) of marine fouling organism larvae in seawater may be measured for example by adding the fluorescent marker, allowing a predetermined time to elapse, filtering the seawater using a plankton net of mesh 50-300 µm (preferably 100 µm), observing the UV spectrum depending on the fluorescent functional groups in the isonitrile compound used by examining the plankton net with a fluorescence microscope, and counting the number of individuals. The filter used depends on the fluorescent functional group, for example with a dansyl group, a UV-B filter (355-425 nm; excitation, 470 nm; absorption), and with a fluorescein group, a GFP filter (470 nm; excitation, 525 nm; absorption) is used. A characteristic fluorescence is observed only for larvae, and is not observed for artemia and rotifers (FIG. 1), so the number of larvae can be easily counted.

The concentration (number of individuals) of marine fouling organism larvae in seawater can be observed immediately after filtration, but it may be observed at any desired time after fixing and preserving with a fixing solution such as formaldehyde or glutaldehyde. For example, the characteristic fluorescence can be observed only for larvae one month or more later by filtering, thoroughly rinsing with seawater, and fixing and preserving the sample in seawater containing 10% neutral formalin. The concentration of the fixing solution such as neutral formalin may be any desired concentration, but is normally within the range of 3-15 mass % and more preferably 5-10 mass %. Also, the preservation time may be any desired time, but it is preferably within one month. After fixing, the temperature for preserving the sample is not particularly limited, but is normally within the range of 2-25°C and the sample is preferably kept away from light.
Hereafter, the invention will be described in further detail referring to specific examples, but it will be understood that the invention is not to be construed as being limited in anyway thereby.

### Example 1

Synthesis of N-(11-isocyano-11-methyl dodecyl) dansyl amide 5 g of 11-bromo undecanoic acid ethyl ester was dissolved in 30 ml of tetrahydrofuran, 40 ml of Methylmagnesium bromide (0.91M solution in tetrahydrofuran) was added with cooling under argon, and the mixture was stirred for one hour.
50 ml of saturated aqueous ammonium chloride solution was added to the reaction mixture, and this was extracted with 200 ml ethyl acetate. The organic layer was washed with water and brine, dried with anhydrous magnesium sulfate and concentrated under reduced pressure to obtain 4.7g of 12-bromo-2-methyl-2-dodecanol.

3.0 g of the obtained 12-bromo-2-methyl-2-dodecanol was dissolved in 10 ml DMF, 2.4 g potassium phthalimide was added, and the mixture was stirred at room temperature for 24 hours. 20 ml of 5% aqueous potassium hydroxide solution was added to the reaction mixture, and the reaction mixture was extracted with 200 ml ethyl acetate. The organic layer was washed with water and brine, dried with anhydrous magnesium sulfate and concentrated under reduced pressure. The residue was purified with column chromatography on silica gel (hexane/ethyl acetate 2:1), and 2.4 g of N-(11-hydroxy-11-methyldodecyl) phthalimide was obtained.

2.4 g of the obtained N-(11-hydroxy-11-methyldodecyl) phthalimide was dissolved in 50 ml methanol, 2 ml of hydrazine-1 hydrate was added, and the mixture was refluxed for 2 hours. 50 ml of brine was added to the reaction mixture, then the mixture was extracted with 200 ml ethyl acetate.
The organic layer was washed with water and brine, dried with anhydrous magnesium sulfate and concentrated under reduced pressure to obtain 1.36 g of 12-amino-2-methyl-2-dodecanol.

750 mg of the obtained 2-amino-2-methyl-2-dodecanol was dissolved in 20 ml of methylene chloride, 550 µl of trimethylsilyl cyanide and 865 mg of silver perchlorate were added, and the mixture was stirred at room temperature for 4 hours. 20 ml of saturated aqueous sodium hydrogen carbonate solution was added to the reaction mixture, the mixture was stirred for 5 more minutes, then 20 ml of brine solution was added. The mixture was filtered with celite^{®} 535., and washed with 200 ml ethyl acetate. The organic layer was washed with water and then brine, dried with anhydrous magnesium sulfate, and concentrated under reduced pressure. The residue was purified with column chromatography on silica gel (ethyl acetate/methanol 10:1), and 470 mg of 11-isocyano-11-methyl dodecylamine was obtained.

50 mg of the obtained 11-isocyano-11-methyl dodecylamine was dissolved in 2 ml of methylene chloride, 90 mg of dansyl chloride and 100 µl of triethylamine were added, and the mixture was stirred at room temperature for 14 hours. After having concentrated the reaction mixture, the residue was purified with column chromatography on silica gel (hexane/ethyl acetate 3:1), and 80 mg of N-(11-isocyano-11-methyldodecyl) dansyl amide compound was obtained.
¹H-NMR δ 8.54 (1H, d, J =8.8Hz), 8.29 (1H, d, J =8.8Hz), 8.25 (1H, dd, J =7.3 and 1.1Hz), 7.57 (1H, dd, J =8.8 and 8.8Hz), 7.53 (1H, dd, J =8.8 and 7.3Hz), 7.19 (1H, d, j =7.3Hz), 4.52 (1H, t, 6.2Hz), 2.89 (6H, s), 2.88 (2H, t, 6.2Hz), 1.58-1.51 (4H, m), 1.46-1.05 (26H, m), including 1.39 (6H, t, J =1.8Hz).

### Example 2

1 ml of a dimethylsulfoxide(DMSO) solution (1 mg/ml) of the compound obtained in Example 1 was added to 100 ml of seawater, in which barnacle, *B. amphitrite* cipris larvae, artemia and rotifers were co-present, and left for 2 hours. The seawater was then filtered by a plankton-net (mesh 40 µm), being observed using a UV-B light filter (355-425 nm, excitation, 470 nm, absorption) (FIG. 1), and the number of barnacle cypris larvae glowing turquoise green was counted. As a result, the number of larvae in 100 ml of seawater was 50. Since fluorescence is not observed for artemia and rotifers, the number of larvae could easily be counted.

### Example 3

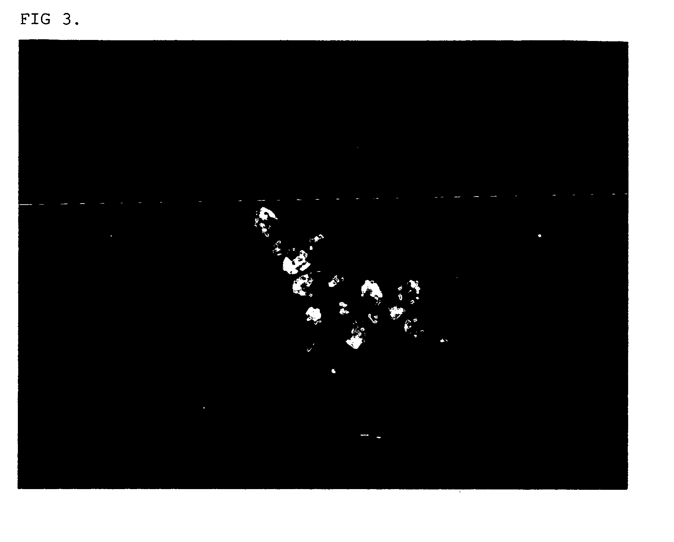

The DMSO solution used in Example 2 was added to 10 ml of seawater in which cypris larvae were present to give a concentration of 10 µg/ml, and the mixture was left to stand for 2 hours. The sea-water was then filtered by a plankton-net (mesh 100 µm), and the collected plankton together with the plankton-net were immersed in seawater containing 10% neutral formaldehyde and the plankton was fixed. After preserving in the refrigerator for 1 month, the fixed plankton was observed under a fluorescence microscope using a UV-B light filter (355-425 nm; excitation, 470 nm; absorption) (FIG. 3). As a result, due to fixing with formaldehyde, the cypris larvae had retained their original shape after one month, an identical fluorescence was observed as similarly as observed immediately after processing, and the cypris larvae alone were detected characteristically.

### Example 4

An identical procedure was followed to that of Example 3, except that instead of the 10 ml of seawater used in Example 3, 50 ml of seawater containing both cypris larvae and zooplankton collected from the sea, and preserving after fixing was performed at room temperature for one week. It was confirmed that the cypris larvae alone were detected characteristically.

### Industrial Applicability

According to the present invention, not only can the presence or absence of marine fouling organisms in seawater be confirmed, but also the concentration of larvae can easily be counted. Hence, various types of damage such as increased water suction pump load in generator cooling systems, decreased cooling efficiency, blocking of thin pipes, torn fishnets due to adhesion of marine organisms, reduced ship speed and increased fuel consumption due to adhesion of marine organisms to the ship hull, can be predicted, and by supplying antifouling agents of suitable amount at the appropriate time, damage due to marine fouling organisms can be effectively prevented.
Moreover, the cost of chemicals used for prevention and elimination can be largely reduced, and marine pollution due to supply of antifouling agents can be minimized, so the invention has a very significant industrial application.

## Claims

1. A novel isonitrile compound represented by the general formula F-A-NC, wherein F represents a fluorescent functional group and A represents a linking chain.

2. The novel isonitrile compound according to claim 1, wherein, F in said general formula is a mononuclear aromatic ring, polynuclear aromatic ring or heterocyclic aromatic ring containing a heteroatom, and A is a linking chain having 2-15 carbon atoms selected from among a group comprising alkyl, ether, ester, amide, sulfide, disulfide, amino, carbamide and thiocarbamide.

3. The novel isonitrile compound according to claim 2, wherein, F in said general formula is phenyl, benzyl, phenethyl, trityl, naphthyl, anthranyl, pyrenyl, 1-(dimethylamino)-5-napthalenesulfonyl (dansyl), dansylaziridyl, 4-dimethylaminoazobenzene-4-sulfonyl (dabsyl), isoindolyl, bimanyl, aminonaphthalenesulfonic acid or residues of derivatives thereof, fluorescein or residues of derivatives thereof, eosin or residues of derivatives thereof, anilinonaphthalene or residues of derivatives thereof, coumarin or residues of derivatives thereof, and pyrene or residues of derivatives thereof.

4. The novel isonitrile compound according to claim 3, wherein F in said general formula is a fluorescein residue, dansyl group, pyrene residue or anthracene residue.

5. The novel isonitrile compound according to claim 4, wherein the isonitrile compound represented by said general formula F-A-NC is any of the following compounds.
(1) 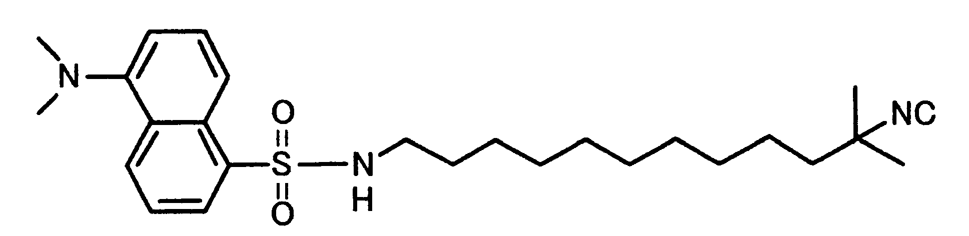 5-dimethylamino-naphthalene-1-sulfonic acid (11-isocyano-11-methyl-dodecyl)-amide
(2) 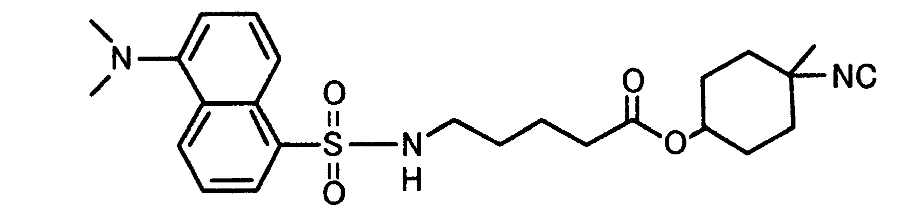 6-(5-dimethylamino-naphthalene-1-sulfonylamino)-hexanoic acid 4-isocyano-4-methyl-cyclohexyl ester
(3) 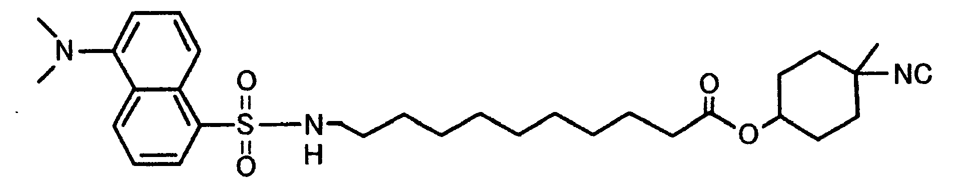 11-(5-dimethylamino-naphthalene-1-sulfonylamino)-undecanoic acid 4-isocyano-4-methyl-cyclohexyl ester
(4) 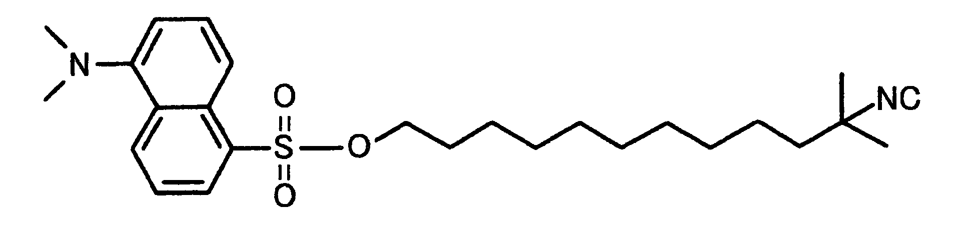 5-dimethylamino-naphthalene-1-sulfonic acid (11-isocyano-11-methyl-dodecyl) ester
(5) 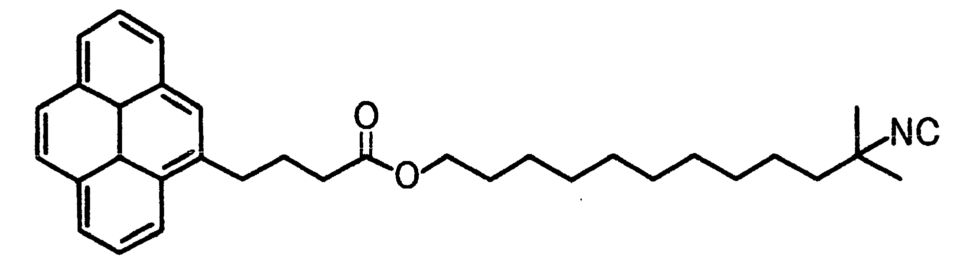 4-(10b, 10c-dihydro-pyrene-4-il)-butyric acid (11-isocyano-11-methyl-dodecyl) ester
(6) 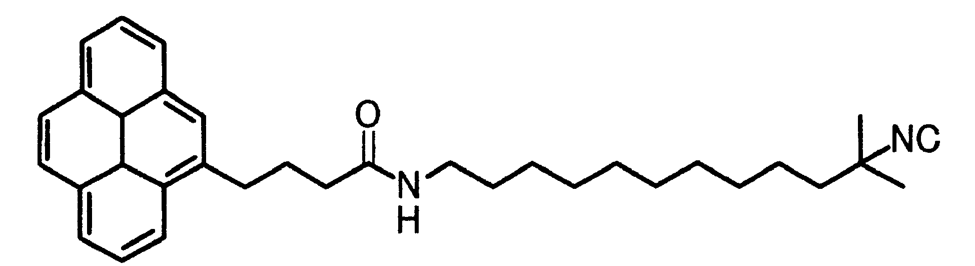 4-(10b, 10c-dihydro-pyrene-4-il)-N-(11-isocyano-11-methyldodecyl) butylamide
(7) 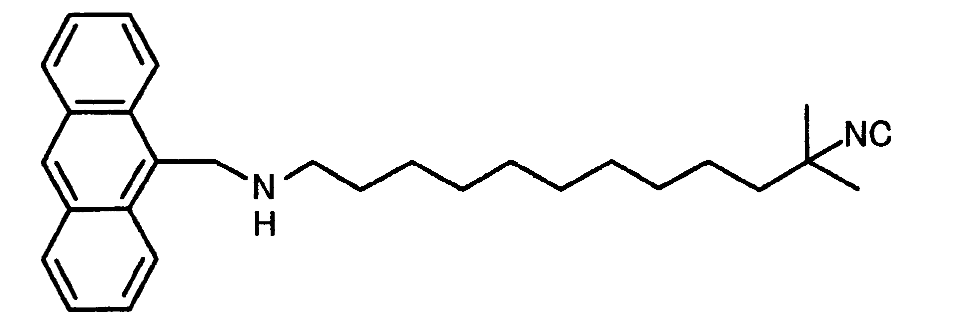 anthracene-9-ilmethyl-(11-isocyano-11-methyl-dodecyl) amine
(8) 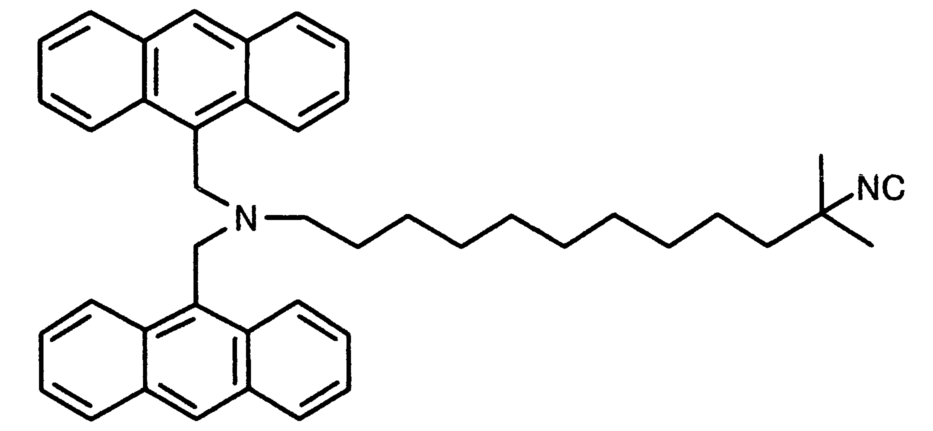 bis-anthracene-9-ilmethyl-(11-isocyano-11-methyl-dodecyl) amine
(9) 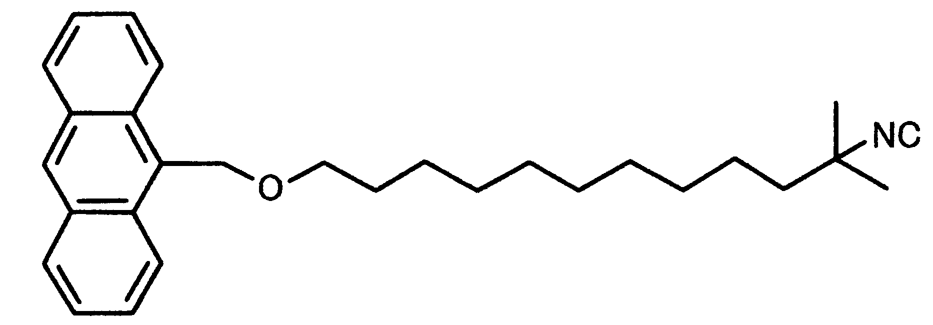 9-(11-isocyano-11-methyl-dodecyloxymethyl) anthracene
(10) 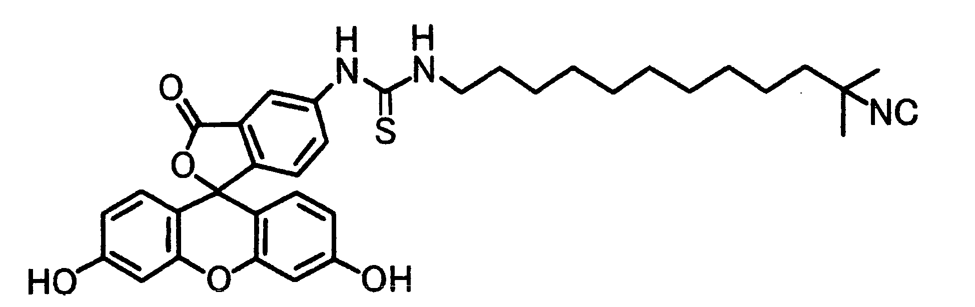 1-fluorescein-3-(11-isocyano-11-methyl-dodecyl) thiourea
(11) 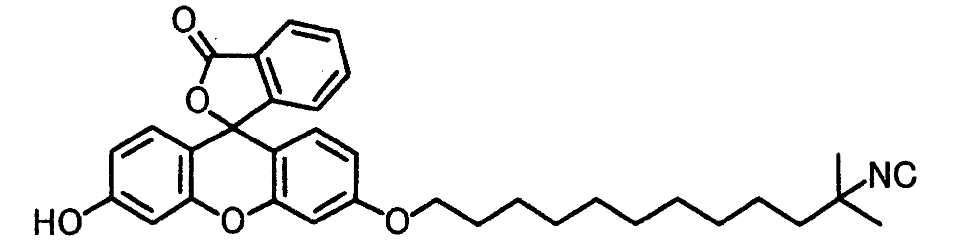 fluorescein o-(11-isocyano-11-methyl-dodecyl) ether
(12) 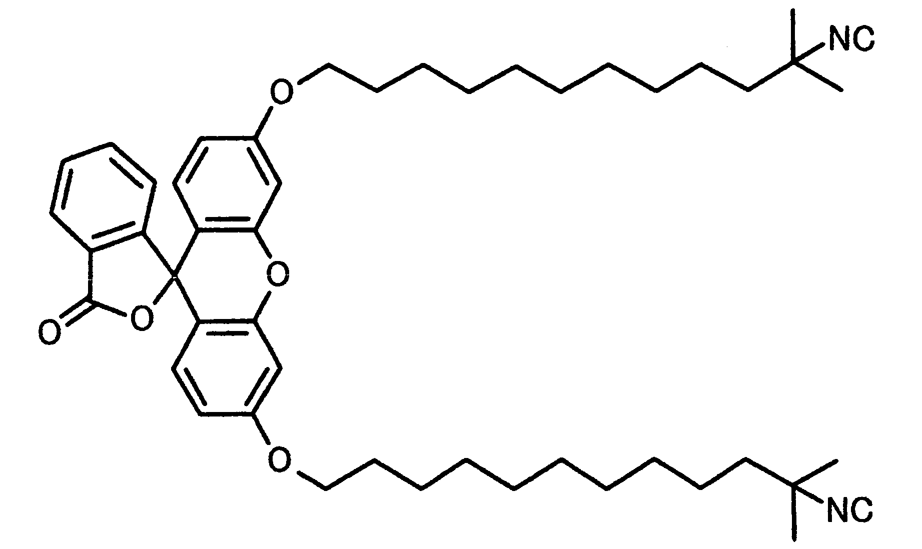 fluorescein o,o'-di-(11-isocyano-11-methyl-dodecyl) ether

6. A fluorescent marker for marine fouling organism larvae, having at least one of the isonitrile compounds represented by the general formula F-A-NC according to claim 1 as active ingredient.

7. The fluorescent marker for marine fouling organism larvae according to claim 6, wherein said isonitrile compound is an isonitrile compound selected from among a group comprising the compounds according to claim 2.

8. A method of manufacturing the isonitrile compound represented by the general formula F-A-NC according to claim 1, wherein, in the case when a compound represented by the general formula X-A-Y (X is amino, hydroxyl, a halogen atom, carboxyl or mercaptyl, and Y is hydroxyl, amino or a halogen atom) is used as starting material, when Y is hydroxyl or a halogen atom, the Y part is converted to a NC group using trimethylsilyl cyanide and a zinc reagent or silver reagent, when Y is amino, the Y part is converted to formamide using a formate ester, converted to a NC group by a dehydration reaction using toluene sulfonic acid chloride, pyridine or the like, and a nucleophilic substitution reaction is then performed with the obtained X-A-NC and the fluorescent functional group F, wherein A and F in the general formula are respectively identical to A and F according to claim 1.

9. A method of detecting marine fouling organism larvae present in seawater, wherein at least one fluorescent marker for marine fouling organism larvae having the isonitrile compound represented by the general formula F-A-NC according to claim 6 as an active ingredient, is added to a sample of seawater, said isonitrile compound is allowed to act on the marine fouling organism larvae, the mixture is filtered using a filter medium, the isonitrile compound used is irradiated by an excitation light on the filter medium, and fluorescence from said isonitrile compound which has acted on the marine fouling organism larvae is observed.

10. The method of detecting marine fouling organism larvae according to claim 9, containing a step wherein the marine fouling organism larvae, following filtration using the filter medium, is washed with seawater or fresh water, and is then fixed on the filter medium using a fixing solution.

11. The method of detecting marine fouling organism larvae according to claim 9 or 10, wherein the fluorescence from said isonitrile compound is observed using a fluorescence microscope, and the number of individual marine fouling organism larvae is counted.
